# EUROPEAN PATENT SPECIFICATION

(11) **EP 4 549 635 B1**
(45) Date of publication and mention of the grant of the patent: **04.03.2026**
(21) Application number: 24163942.6
(22) Date of filing: 15.03.2024
(51) Int. Cl.: C25D 7/06

(54) **HORIZONTAL TRANSFER-TYPE PLATING APPARATUS AND PLATING METHOD FOR ANODE MATERIALS FOR SECONDARY BATTERIES**
PLATTIERUNGSVORRICHTUNG MIT HORIZONTALER ÜBERTRAGUNG UND PLATTIERUNGSVERFAHREN FÜR ANODENMATERIALIEN FÜR SEKUNDÄRBATTERIEN
APPAREIL DE PLACAGE DE TYPE À TRANSFERT HORIZONTAL ET PROCÉDÉ DE PLACAGE POUR MATÉRIAUX D'ANODE POUR BATTERIES SECONDAIRES

(30) Priority: 31.10.2023 KR 20230147928
(43) Date of publication of application: 07.05.2025
(73) Proprietor: Taesung Co., Ltd., Ansan-si, Gyeonggi-do 15611 (KR)
(72) Inventor: KIM, Jong Hak, Ansan-si 15596 (KR); PARK, Chol Won, Incheon 21675 (KR)
(74) Representative: Ter Meer Steinmeister & Partner

(56) References cited:
- CN-A- 110 129 865
- JP-A- H05 339 787
- US-A- 4 396 469

## Description

### Technical Field

The present invention relates to a horizontal transfer-type plating apparatus and a plating method for anode materials for secondary batteries and, more particularly, to a horizontal transfer-type plating apparatus and a plating method for anode materials for secondary batteries, wherein the apparatus has an improved structure to transport an anode material for a secondary battery horizontally using current-carrying rolls of a rectifier while the anode material is passing through a plating bath, and to maintain the tension of the anode material using vertically-lifting current-carrying rolls.

In addition, the present invention relates to a horizontal transfer-type plating apparatus and a plating method for anode materials for secondary batteries, wherein the apparatus has an improved structure to prevent deformation such as wrinkles or product damage from occurring on the left and right edges of an anode material by individually controlling the tension of the left and right edges of the anode material of a thin sheet.

### Description of the Related Art

In general, as various portable electronic devices such as video cameras, cordless phones, mobile phones, and laptops have rapidly spread into our daily lives, the demand for secondary batteries used as a power source has increased significantly. Among the secondary batteries, lithium secondary batteries have been actively researched and developed both domestically and internationally due to their many desirable characteristics such as large capacity and high energy density, and are currently the most widely used among secondary batteries.

Lithium secondary batteries are basically composed of a positive electrode (cathode), a negative electrode (anode), and an electrolyte. Thus, research and development on lithium secondary batteries may be largely divided into research on cathode and anode materials, and electrolytes.

Natural graphite, which is used as an anode material for lithium secondary batteries, offers excellent initial capacity but tends to have low efficiency and cycle capacity. This is known to be caused by an electrolyte decomposition reaction at the edges of highly crystalline natural graphite.

In order to overcome such shortcomings of natural graphite, a method of obtaining an anode active material with slightly reduced initial capacity but improved efficiency and cycle capacity characteristics has been presented. In this method, natural graphite is surface treated (coated) with low-crystalline carbon and heat-treated at over 1,000 °C so that the natural graphite surface is coated with low crystalline carbide.

As an example, Japanese Patent Application Publication No. 2002-084836 discloses the characteristics of graphite in which some or all of the edge portions of crystals of a core carbon material are coated with a carbon material for coating formation.

However, in the process of coating and pressing the anode active material obtained in the above manner onto an electrode current collector such as a copper coil in order to use the anode active material as an electrode, the coated carbide is broken, and through this broken part, the edges of the highly crystalline natural graphite react with electrolytes again, which actually reduces the carbide coating effect.

Additionally, although the above Japanese Patent contains information on the amount and heat treatment temperature of carbon material for coating natural graphite and X-ray diffraction and Raman analyses of natural graphite coated with carbon material for coating, there is no information on the effect of the coated carbide breaking during the pressing process in actual electrode application.

Conventional technologies related to anode materials for secondary batteries include Korean Patent No. 10-0884431, "ANODE MATERIALS FOR SECONDARY BATTERIES AND SECONDARY BATTERIES USING SAME" (Registered February 11, 2009), which discloses an anode material for a secondary battery manufactured by coating a core carbon material with low crystalline carbon and firing the carbon-coated core carbon material, wherein the specific surface area after compressing the anode material is 1.4 times or less than the specific surface area before compression.

As another example of conventional technologies related to plating of anode materials for secondary batteries, there is Korean Patent No. 10-0748791 "APPARATUS FOR PERPENDICULAR PLATING AND PLATING METHOD THEREOF" (Registered August 06, 2007). The apparatus includes: a plating bath that accommodates a plating solution and has an entrance and an exit so that sheet-shaped materials to be plated may continuously pass through the plating solution; a cathode material placed at a predetermined distance from the materials to be plated that continuously pass within a chamber equipped with the plating bath; an unwinder roller installed on the entry side of the plating bath to continuously supply the materials to be plated into the plating bath; a rewinder roller that winds a plated material; a plurality of clips installed spaced apart on the top of a plated material introduced into the chamber equipped with the plating bath, and to which a negative potential is applied; and a means of attaching and detaching an electric tape attached to the entire top of a plated material.

Since a conventional anode material for secondary batteries is configured in the shape of a thin sheet, during copper plating, as the anode material of the thin sheet is plated in a way that moves vertically up and down by means of an electric roll, the contact area between a current-carrying roll and the anode material increases, and thus it is difficult to maintain the tension of the anode material, and deformation of the anode material frequently occurs due to the increase in the contact area.

Moreover, in the plating process of conventional anode materials, that is, in the process of maintaining the tension of an anode material to prevent deformation while allowing the anode material to pass through a plating bath, if the transport speed of anode material products is increased, damage such as tearing of an anode material may occur due to friction in the contact area. Due to the disadvantage that deformation of an anode material occurs easily, the production speed cannot be increased.

Furthermore, JP H05 339 787 A discloses a tensioning system for a continuous, horizontal electroplating apparatus that is suitable to coat anode materials for secondary batteries.

CN 110 129 865 A discloses current conducting rolls to which electricity can be transferred via a slip ring.

US 4 396 469 A discloses a coating process using current-carrying rolls as electrodes.

### Document of Related Art

(Patent Document 1) Korean Patent No. 10-0884431, "ANODE MATERIALS FOR SECONDARY BATTERIES AND SECONDARY BATTERIES USING SAME" (Registered February 11, 2009)
(Patent Document 2) Korean Patent No. 10-0748791 "APPARATUS FOR PERPENDICULAR PLATING AND PLATING METHOD THEREOF" (Registered August 06, 2007)
(Patent Document 3) JP H05 339 787 A "CONTINOUS ELECTROPLATING METHOD" (Registered December 21, 1993)
(Patent Document 4) CN 110 129 865 A "ELECTRIC CONDUCTING DEVICE OF REEL-TO-REEL WHEEL TYPE PLATING LINE LEAD FRAME" (Registered August 16, 2019)
(Patent Document 5) US 4 396 469 A "PROCESS AND APPARATUS FOR CONTINOUSLY COATING A SOLID ELECTROLYTE WITH A CATALYTICALLY ACTIVE METAL" (Registered August 2, 1983)

### SUMMARY

Accordingly, the present invention has been made keeping in mind the above problems occurring in the related art, and the present invention is intended to provide an improved horizontal transfer-type plating apparatus and an improved plating method for anode materials for secondary batteries. The aim of the invention is in particular to provide a horizontal transfer-type plating apparatus, wherein the apparatus has an improved structure to transport an anode material for a secondary battery horizontally and allows to maintain the tension of the anode material. The apparatus may have an improved structure to transport an anode material for a secondary battery horizontally using current-carrying rolls of a rectifier while the anode material is passing through a plating bath and is able to maintain the tension of the anode material by vertically-liftable current-carrying rolls.

In addition, an objective of the present invention is to provide a horizontal transfer-type plating apparatus and a plating method for anode materials for secondary batteries, wherein the apparatus has an improved structure to prevent deformation such as wrinkles or product damage from occurring on the left and right edges of an anode material by individually controlling the tension of the left and right edges of the anode material of a thin plate.

In order to achieve the above objective, according to an aspect of the present invention, there is provided a horizontal transfer-type plating apparatus for anode materials for secondary batteries, the apparatus including: a chamber with a plurality of current-carrying rolls and equipped with a plating bath containing a plating solution, wherein the plurality of current-carrying rolls is rotated and driven by a driving means to transport an anode material for a secondary battery in a horizontal direction, and arranged up and down to adjust tension of the anode material; a lifting means which is configured to raise and lower the current-carrying rolls while plating; a slip ring that is coupled to a connecting shaft connected to an end of a drive shaft for the current-carrying rolls and that is configured to supply power from a rectifier to the current-carrying rolls; and the connecting shaft and the drive shaft.

In other words, the present invention provides a horizontal transfer-type plating apparatus for anode materials for secondary batteries, the apparatus including a plurality of current-carrying rolls disposed in a chamber equipped with a plating bath containing a plating solution, wherein the plurality of current-carrying rolls is configured to be rotated and driven by driving means and is further configured to transport an anode material for a secondary battery, preferably a sheet-shaped anode material for a secondary battery, in a horizontal direction. At least one roll from the plurality of current-carrying rolls is arranged above and another one below the anode material. Besides that, the apparatus includes: a lifting means configured to raise and lower the current-carrying rolls to allow for an adjustment of the tension of the anode material while plating; a slip ring that is coupled to a connecting shaft connected to an end of a drive shaft for the current-carrying rolls, wherein the slip ring is configured to supply power from a rectifier to the plurality of current-carrying rolls; and the connecting shaft and the drive shaft.

The apparatus according to the present invention preferably is an apparatus for electroplating anode materials for secondary batteries, more preferably for electroplating anode materials with copper, wherein the anode materials even more preferably have a sheet shape, in particular are thin sheets.

Furthermore, the apparatus is preferably suitable for continuous plating processes, in particular continuous plating of sheet-shaped anode materials for secondary batteries. In this case, the sheet-shaped anode material may be provided on an unwinder roller installed on the entrance side of the apparatus. A rewinder roller that winds the plated anode material may be installed at the exit side of the apparatus.

The lifting means may include: a base plate fixed to an inside of the chamber equipped with the plating bath; a fixing bracket fixed to each of left and right sides of the base plate; a lifting screw coupled to the left or right fixing bracket in a vertical direction, provided with a lifting gear at the top thereof, fastened to a lifting plate supporting the drive shaft for the current-carrying rolls, and raising and lowering the lifting plate up and down during rotation; a lifting member coupled to each of lower left and right sides of the lifting plate to move up and down in conjunction with a movement of the lifting plate in the vertical direction, and coupled to penetrate each end of the drive shaft for the current-carrying rolls to lift the current-carrying rolls during a lifting motion of the lifting plate; an interlocking member that is coupled to the lower left side of the lifting plate and is coupled to penetrate the connecting shaft to interlock and move the connecting shaft up and down during the lifting motion of the lifting plate; and a lifting motor that is fixed to each of the left and right sides of the base plate, is rotated when power is supplied, and has an interlocking gear that engages with the lifting gear of the lifting screw.

The lifting means may include: a base plate fixed to an inside of the chamber equipped with the plating bath; a fixing bracket fixed to a center of the base plate; a lifting screw coupled to the fixing bracket in a vertical direction, provided with a lifting gear at the top thereof, fastened to a lifting plate supporting the drive shaft for the current-carrying rolls, and raising and lowering the lifting plate up and down during rotation; a lifting member coupled to each of lower left and right sides of the lifting plate to move up and down in conjunction with a movement of the lifting plate in the vertical direction, and coupled to penetrate each end of the drive shaft for the current-carrying rolls to lift the current-carrying rolls during a lifting motion of the lifting plate; an interlocking member that is coupled to the lower left side of the lifting plate and is coupled to penetrate the connecting shaft to interlock and move the connecting shaft up and down during the lifting motion of the lifting plate; and a lifting motor that is fixed to the base plate, is rotated when power is supplied, and has an interlocking gear that engages with the lifting gear of the lifting screw.

The lifting means may include: a base plate fixed to an inside of the chamber equipped with the plating bath; a fixing bracket fixed to each of left and right sides of the base plate; a lifting screw coupled to the left or right fixing bracket in a vertical direction, provided with a lifting gear at the top thereof, fastened to a lifting plate supporting the drive shaft for the current-carrying rolls, and raising and lowering the lifting plate up and down during rotation; a lifting member coupled to each of lower left and right sides of the lifting plate to move up and down in conjunction with a movement of the lifting plate in the vertical direction, and coupled to penetrate each end of the drive shaft for the current-carrying rolls to lift the current-carrying rolls during a lifting motion of the lifting plate; an interlocking member that is coupled to the lower left side of the lifting plate and is coupled to penetrate the connecting shaft to interlock and move the connecting shaft up and down during the lifting motion of the lifting plate; and a rotating shaft mechanism disposed on each of the left and right sides of the base plate, connected to a handle to be rotated by an operator's manual operation, and has an interlocking gear that engages with the lifting gear of the lifting screw.

The lifting means may further include: a guide means for guiding the up and down lifting motion of the lifting plate, wherein the guide means may be provided with: a guide bracket fixed to the base plate and disposed on each of upper and lower sides of the lifting plate; and a guide member that is coupled to penetrate the lifting plate and has upper and lower ends thereof supported by the guide brackets.

The lifting screw of the lifting means may consist of first and second lifting screws arranged to be spaced apart from each other in a left-right direction to individually control left and right lifting motions of the drive shaft for the current-carrying rolls, and the lifting motor of the lifting means may consist of first and second lifting motors each having an interlocking gear that is engaged with the lifting gear of each of the first and second lifting screws.

The driving means may include: a driving gear coupled to the drive shaft for the current-carrying rolls; and a rotary motor fixed to a base plate provided in the chamber equipped with the plating bath, having a rotary gear engaged with the driving gear, and rotated when external power is supplied to rotate the drive shaft by means of the driving gear, wherein the base plate is fixed to an inside of the chamber equipped with the plating bath.

Within the context of the present invention "current-carrying rolls" are to be understood as rolls carrying an electric current. Moreover, the term "power" refers to electric power.

In order to achieve the above objective, according to an aspect of the present invention, there is provided a horizontal transfer-type plating method for anode materials for secondary batteries, the method including: a preparatory step of arranging a plurality of current-carrying rolls up and down at positions close to entrance and exit sides of a plating bath containing a plating solution; a transfer step of transferring an anode material for a secondary battery into the plating bath in a horizontal movement manner through the current-carrying rolls arranged up and down and to which power of a rectifier is applied; and a tension adjustment step in which tension of the anode material for a secondary battery is adjusted by raising and lowering the current-carrying rolls using a lifting means while plating the anode material for a secondary battery through the transfer step, i.e. in or during the transfer step.

Within the context of the present invention "positions close to entrance and exit sides of a plating bath" may be understood as positions within a distance of less than the length of the plating bath from the entrance and exit sides of the plating bath. Preferably, "positions close to entrance and exit sides of a plating bath" may be understood as positions within a distance of less than 0.5 times the length of the plating bath from its entrance and exit sides.

In the tension adjustment step, a height of left and right edge portions of each of the current-carrying rolls may be individually adjusted as the left and right edge portions of the each of the current-carrying rolls, which are in contact with the anode material for a secondary battery, are individually raised and lowered using the lifting means.

In the tension adjustment step, the tension of the anode material for a secondary battery may be adjusted by lifting the current-carrying rolls up and down using the lifting means consisting of: a fixing bracket fixed to a side of a base plate provided inside a chamber; a lifting screw coupled to penetrate the fixing bracket in a vertical direction, provided with a lifting gear at the top thereof, fastened to a lifting plate supporting a drive shaft for the current-carrying rolls, and raising and lowering the lifting plate up and down during rotation; a lifting member coupled to a lower side of the lifting plate, moving up and down in conjunction with a movement of the lifting plate in the vertical direction, and coupled to penetrate each end of the drive shaft for the current-carrying rolls to lift the current-carrying rolls during a lifting motion of the lifting plate; an interlocking member that is coupled to a lower left side of the lifting plate and is coupled to penetrate a connecting shaft to interlock and move the connecting shaft up and down during the lifting motion of the lifting plate; and a lifting motor that is fixed to the base plate, is rotated when power is supplied, and has an interlocking gear that engages with the lifting gear of the lifting screw.

According to the present invention, an appropriate tension force can be maintained to prevent sagging or deformation of an anode material while passing thin-sheet anode materials for secondary batteries between current-carrying rolls arranged up and down in the horizontal direction, and productivity can be increased by speeding up work.

In addition, according to the present invention, since anode materials for secondary batteries are transported in the horizontal direction, the contact area between a direction change roll and the anode materials for secondary batteries can be minimized or avoided, and tension can be maintained to prevent damage factors such as wrinkles or tears from occurring during the transport of the wide, thin sheet-shaped anode materials for secondary batteries.

Furthermore, according to the present invention, when a lifting motor and a lifting screw of a lifting means are placed on the left and right sides of a lifting plate, the tension force of an anode material for a secondary battery can be finely adjusted by finely adjusting the height of the left and right sides of a current-carrying roll, thereby preventing damage to the anode material for a secondary battery.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a front view schematically showing a horizontal transfer-type plating apparatus for anode materials for secondary batteries according to the present invention;
FIG. 2 is a front view showing an example of a lifting means according to the present invention;
FIG. 3 is a side view of FIG. 2;
FIG. 4 is a front view showing another example of a lifting means according to the present invention;
FIG. 5 is view showing still another example of a lifting means according to the present invention; and
FIG. 6 is a flowchart sequentially showing a horizontal transfer-type plating method for anode materials for secondary batteries according to the present invention.

### DETAILED DESCRIPTION

In describing the embodiments of the present invention, when it is determined that a detailed description of a related known function or configuration may unnecessarily obscure the subject matter of the present invention, the specific description thereof will be omitted. In addition, the terms described below are defined in consideration of functions in the present invention, and may vary depending on the user's intention or custom, etc. Therefore, the terms should be interpreted based on the contents throughout the specification. Furthermore, when a part is said to "include" a certain component, unless specifically stated to the contrary, this does not mean excluding other components, but rather including the other components.

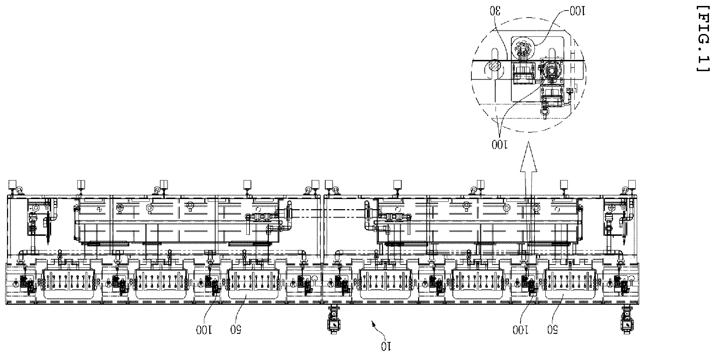

Referring to FIGS. 1 to 4, a horizontal transfer-type plating apparatus for anode materials for secondary batteries according to the present invention includes: a chamber 10 with a plurality of current-carrying rolls 100 and equipped with a plating bath 50 containing a plating solution, wherein the plurality of current-carrying rolls 100 is rotated and driven by a driving means 200 to transport an anode material 30 for a secondary battery in a horizontal direction, and arranged up and down to adjust tension of the anode material 30; a lifting means 300 which is configured to raise and lower the current-carrying rolls 100 while plating; a slip ring 400 that is coupled to a connecting shaft 150 connected to an end of a drive shaft 110 for the current-carrying rolls 100 and that is configured to supply power from a rectifier (not shown) to the current-carrying rolls 100; and the connecting shaft 150 and the drive shaft 110.

At this time, anode materials for secondary batteries are plated by using an electro copper plating method.

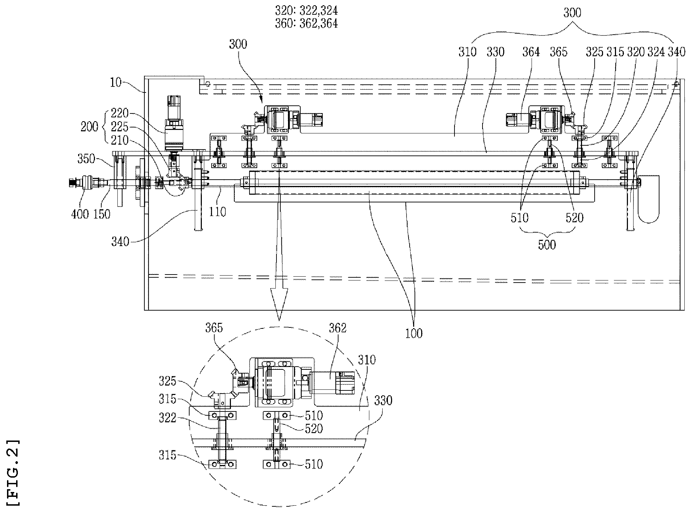

Referring to FIGS. 1 and 2, a plurality of the plating baths 50 are arranged to be spaced apart from each other inside the chamber 10, and the anode material 30 is transferred from the entrance located on the left side of the plating bath 50 to the exit on the right side.

The current-carrying rolls 100 are disposed inside the chamber 10, and are disposed up and down at positions close to the entrance and exit sides of the plating bath 50.

The anode material 30 for a secondary battery passes between the current-carrying rolls 100 arranged up and down while being transported horizontally from the left side to the right side of the chamber 10.

The current-carrying roll 100 has a structure in which the power of the rectifier is supplied to the drive shaft 110 for the current-carrying roll 100 through the slip ring 400 and the connecting shaft 150.

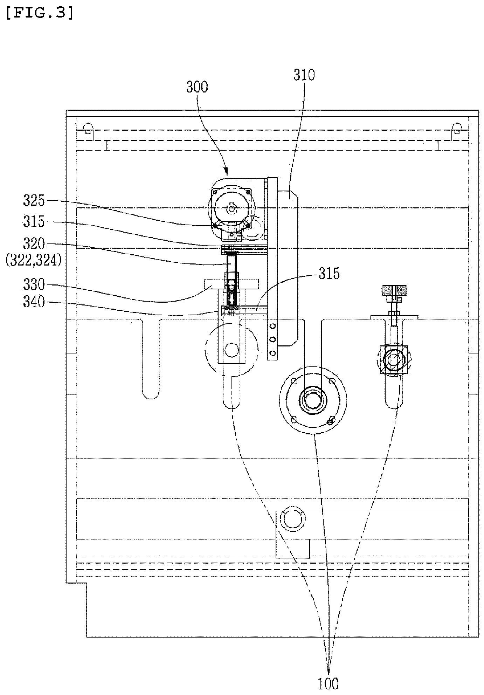

As shown in FIGS. 2 and 3, an example of the lifting means 300 for lifting the current-carrying roll 100 up and down includes: a base plate 310 fixed to the inside of the chamber 10 equipped with the plating bath 50; a fixing bracket 315 fixed to each of the left and right sides of the base plate 310; a lifting screw 320 coupled to the left or right fixing bracket 315 so as to penetrate the fixing bracket 315 in the vertical direction, provided with a lifting gear 325 at the top thereof, fastened to a lifting plate 330 supporting the drive shaft 110 of the current-carrying roll 100, and raising and lowering the lifting plate 330 up and down during rotation; a lifting member 340 coupled to each of the lower left and right sides of the lifting plate 330 to move up and down in conjunction with the movement of the lifting plate 330 in the vertical direction, and coupled to penetrate each end of the drive shaft 110 of the current-carrying roll 100 to lift the current-carrying roll 100 during the lifting motion of the lifting plate 330; an interlocking member 350 that is coupled to the lower left side of the lifting plate 330 and is coupled to penetrate the connecting shaft 150 to interlock and move the connecting shaft 150 up and down during the lifting motion of the lifting plate 330; and a lifting motor 360 that is fixed to each of the left and right sides of the base plate 310, is rotated when power is supplied, and has an interlocking gear 365 that engages with the lifting gear 325 of the lifting screw 320.

Referring to FIG. 2, the lifting means 300 performs the function of lifting and lowering the connecting shaft 150 connected to the drive shaft 110, the drive shaft 110, and the current-carrying roll 100 up and down.

The lifting means 300 further includes a guide means 500 for guiding the up-and-down lifting motion of the lifting plate 330.

The guide means 500 includes: a guide bracket 510 fixed to the base plate 310 and disposed on each of the upper and lower sides of the lifting plate 330; and a guide member 520 that is coupled to penetrate the lifting plate 330 and has upper and lower ends thereof supported by the guide brackets 510.

The lifting screw 320 of the lifting means 300 consists of first and second lifting screws 322 and 324 arranged to be spaced apart from each other in the left-right direction to individually control the left and right lifting motions of the drive shaft 110 of the current-carrying roll 100, and the lifting motor 360 of the lifting means 300 consists of first and second lifting motors 362 and 364 having interlocking gears 365 that are respectively engaged with the lifting gears 325 of the first and second lifting screws 322 and 324.

Due to this, as for the lifting means 300, as the first and second lifting screws 322 and 324 are arranged to be fastened to the left and right sides of the lifting plate 330, respectively, to individually control the left and right sides of the drive shaft 110 of the current-carrying roll 100, and according to the driving operation of the first and second lifting motors 362 and 364, the first and second lifting screws 322 and 324 are operated respectively to control the height of the left and right sides of the current-carrying roll 100, the tension force on the left and right edges of the thin sheet anode material 30 for a secondary battery may be individually controlled, thereby preventing damage such as deformation such as wrinkles or tearing of a product.

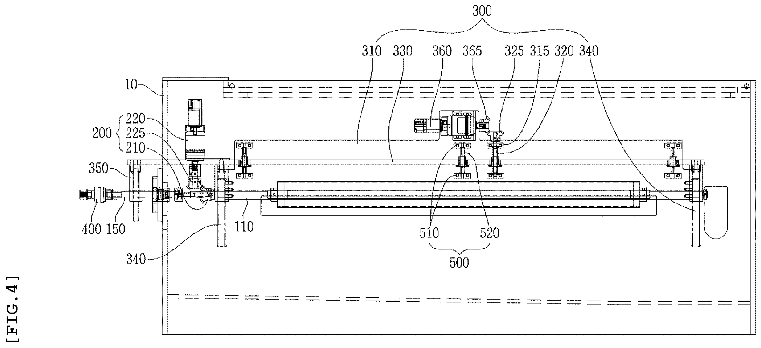

FIG. 4 is a view showing another example of the lifting means according to the present invention. In this case, instead of having two lifting means 300 arranged to be spaced apart from each other on the left and right sides of the lifting plate 330 as described above, the lifting means 300 consisting of one lifting motor 360 and one lifting screw 320 is disposed at the center of the base plate 310, and the current-carrying roll 100 linked to the lifting plate 330 and the lifting member 340 is moved up and down.

Another example of the lifting means 300 as shown in FIG. 4 includes: a base plate 310 fixed to the inside of the chamber 10 equipped with the plating bath 50; a fixing bracket 315 fixed to the center of the base plate 310; a lifting screw 320 coupled to the fixing bracket 315 so as to penetrate the fixing bracket 315 in the vertical direction, provided with a lifting gear 325 at the top thereof, fastened to a lifting plate 330 supporting the drive shaft 110 of the current-carrying roll 100, and raising and lowering the lifting plate 330 up and down during rotation; a lifting member 340 coupled to each of the lower left and right sides of the lifting plate 330, moving up and down in conjunction with the movement of the lifting plate 330 in the vertical direction, and coupled to penetrate each end of the drive shaft 110 of the current-carrying roll 100 to lift the current-carrying roll 100 during the lifting motion of the lifting plate 330; an interlocking member 350 that is coupled to the lower left side of the lifting plate 330 and is coupled to penetrate the connecting shaft 150 to interlock and move the connecting shaft 150 up and down during the lifting motion of the lifting plate 330; and a lifting motor 360 that is fixed to the base plate 310, is rotated when power is supplied, and has an interlocking gear 365 that engages with the lifting gear 325 of the lifting screw 320.

That is, as in the case of another example of the lifting means 300, as shown in FIG. 4, the current-carrying roll 100 may be lifted up and down using a single lifting motor 360, a lifting screw 320, a lifting plate 330, and lifting members 340 on opposite sides. However, what is more preferable is that, as in the case of the lifting means 300 of the present invention described above and shown in FIG. 2, when the lifting motor 360 and the lifting screw 320 are placed at spaced-apart positions on the left and right sides of the lifting plate 330, the height of the left and right sides of the current-carrying roll 100 may be finely controlled individually, so that the tension force of the left and right edges of the anode material 30 is controlled to be finely adjusted during the horizontal transfer of the wide anode material 30 for a secondary battery, thereby reducing deformation factors such as wrinkles.

One end of the connecting shaft 150 is connected to the drive shaft 110 of the current-carrying roll 100 and interlocked through a shaft coupling, while the other end of the connecting shaft 150 protrudes to the outside of the chamber 10 and the slip ring 400 is attached.

The interlocking member 350 is coupled to the lower side of the end of the lifting plate 330 protruding to the outside of the chamber 10 and is coupled to support the connecting shaft 150.

The driving means 200 includes: a driving gear 210 coupled to the drive shaft 110 of the current-carrying roll 100; and a rotary motor 220 fixed to a base plate 310 provided in the chamber 10 equipped with the plating bath 50, having a rotary gear 225 engaged with the driving gear 210, and rotated when external power is supplied to rotate the drive shaft 110 by means of the driving gear 210, wherein the base plate 310 is fixed to an inside of the chamber 10 equipped with the plating bath 50.

In addition, in the driving means 200, the driving gear 210 and the rotary gear 225 are provided in a gear meshing structure of bevel gears so that the rotational driving force of the lifting motor 360 is transmitted, and the lifting screw 320 may adopt a TM screw, which is a lead screw.

As for the lifting means 300, while an automatic lifting method, as previously described, may be adopted in which the drive shaft 110 and the current-carrying roll 100 are automatically raised and lowered by the rotational driving force of the lifting motor 360, a manual lifting method may also be adopted in which the current-carrying roll 100 is raised and lowered by means of the lifting plate 330 and the lifting member 340 using the rotational driving force using the worker's manual labor rather than the driving force of the motor.

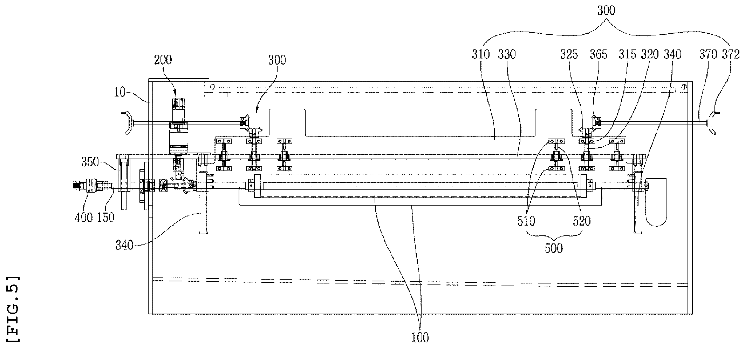

As shown in FIG. 5, still another example of the lifting means 300 to which the manual lifting method is applied includes: a base plate 310 fixed to the inside of the chamber 10 equipped with the plating bath 50; a fixing bracket 315 fixed to each of the left and right sides of the base plate 310; a lifting screw 320 coupled to the left or right fixing bracket 315 so as to penetrate the fixing bracket 315 in the vertical direction, provided with a lifting gear 325 at the top thereof, fastened to a lifting plate 330 supporting the drive shaft 110 of the current-carrying roll 100, and raising and lowering the lifting plate 330 up and down during rotation; a lifting member 340 coupled to each of the lower left and right sides of the lifting plate 330 to move up and down in conjunction with the movement of the lifting plate 330 in the vertical direction, and coupled to penetrate each end of the drive shaft 110 of the current-carrying roll 100 to lift the current-carrying roll 100 during the lifting motion of the lifting plate 330; an interlocking member 350 that is coupled to the lower left side of the lifting plate 330 and is coupled to penetrate the connecting shaft 150 to interlock and move the connecting shaft 150 up and down during the lifting motion of the lifting plate 330; and a rotating shaft mechanism 370 disposed on each of the left and right sides of the base plate 310, connected to a handle 372 to be rotated by the operator's manual operation, and has an interlocking gear 365 that engages with the lifting gear 325 of the lifting screw 320.

The handle 372 is disposed on the outside of the chamber 10, and the axis of the handle 372 is connected to the rotating shaft mechanism 370 so as to be interlocked. Thus, as an operator manually rotates the handle 372 in one direction or the other outside of the chamber 10, the interlocking gear 365 of the rotating shaft mechanism 370 rotates, and lifting plate 330 fastened to the lifting screw 320 is lifted up and down.

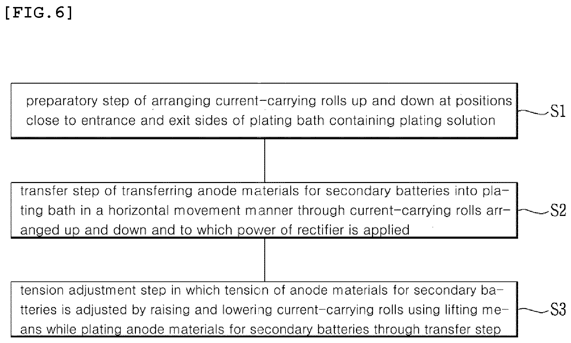

As shown in FIGS. 1, 2, and 6, a horizontal transfer-type plating method for anode materials for secondary batteries, which is another characteristic element of the present invention, includes: a preparatory step (S1) of arranging a plurality of current-carrying rolls 100 up and down at positions close to the entrance and exit sides of a plating bath 50 containing a plating solution; a transfer step (S2) of transferring an anode material 30 for a secondary battery into the plating bath 50 in a horizontal movement manner through the current-carrying rolls 100 arranged up and down and to which the power of a rectifier is applied; and a tension adjustment step (S3) in which the tension of the anode material 30 for a secondary battery is adjusted by raising and lowering the current-carrying rolls 100 using a lifting means 300 while plating the anode material 30 for a secondary battery through the transfer step (S2), i.e. in or during the transfer step.

In the tension adjustment step (S3) of a preferred embodiment of the plating method, the height of the left and right edge portions of the current-carrying roll 100 is individually adjusted as the left and right edge portions of the current-carrying roll 100, which are in contact with the anode material 30 for a secondary battery, are individually raised and lowered using the lifting means 300.

Furthermore, in the tension adjustment step (S3) of yet another preferred embodiment of the plating method, the tension of the anode material 30 for a secondary battery is adjusted by lifting the current-carrying rolls 100 up and down using the lifting means 300 consisting of: a fixing bracket 315 fixed to one side of a base plate 310 provided inside a chamber 10; a lifting screw 320 coupled to the fixing bracket 315 so as to penetrate the fixing bracket 315 in the vertical direction, provided with a lifting gear 325 at the top thereof, fastened to a lifting plate 330 supporting a drive shaft 110 of the current-carrying roll 100, and raising and lowering the lifting plate 330 up and down during rotation; a lifting member 340 coupled to the lower side of the lifting plate 330, moving up and down in conjunction with the movement of the lifting plate 330 in the vertical direction, and coupled to penetrate each end of the drive shaft 110 of the current-carrying roll 100 to lift the current-carrying roll 100 during the lifting motion of the lifting plate 330; an interlocking member 350 that is coupled to the lower left side of the lifting plate 330 and is coupled to penetrate a connecting shaft 150 to interlock and move the connecting shaft 150 up and down during the lifting motion of the lifting plate 330; and a lifting motor 360 that is fixed to the base plate 310, is rotated when power is supplied, and has an interlocking gear 365 that engages with the lifting gear 325 of the lifting screw 320.

In the lifting means 300, when the previously described lifting motor 360 is rotated, because the interlocking gear 365 is engaged with the lifting gear 325 of the lifting screw 320, the lifting screw 320 rotates interlocked. Accordingly, the lifting plate 330 to which the lifting screw 320 is fastened is moved up and down, and the drive shaft 110 of the current-carrying roll 100 supported on the lifting member 340 coupled to the lifting plate 330 is moved up and down.

In addition, the drive shaft 110 is rotated according to the rotational drive of the rotary motor 220 to rotate the current-carrying rolls 100, and horizontally transports the anode material 30 for a secondary battery passing between the current-carrying rolls 100 arranged up and down.

Furthermore, a slip ring 400 is attached to an end of the connecting shaft 150, the connecting shaft 150 at the other end being connected through a shaft coupling to the end of the drive shaft 110. By means of the slip ring 400 the power of a rectifier may be supplied to the current-carrying rolls 100, which in turn supply the power of the rectifier to the anode material 30 for a secondary battery.

In the conventional case, for the plating work of an anode material 30 for a secondary battery, the anode material is transported in the vertical direction rather than the horizontal direction, and the contact area between a roll for direction change and the anode material 30 is expanded and the work speed is slowed. By contrast, in the present invention, while passing thin-sheet anode materials 30 for secondary batteries between current-carrying rolls 100 arranged up and down in the horizontal direction, an appropriate tension force may be maintained to prevent the anode materials 30 for secondary batteries from sagging or deforming, and productivity may be increased by speeding up work.

In addition, according to the present invention, since anode materials 30 for secondary batteries are transported in the horizontal direction, the contact area between a roll for direction change and the anode materials 30 for secondary batteries may be minimized, and tension may be maintained to prevent damage factors such as wrinkles or tears from occurring during the transport of the wide, thin sheet-shaped anode materials for secondary batteries.

Furthermore, according to a preferred embodiment of the present invention, when the lifting motor 360 and the lifting screw 320 of the lifting means 300 are placed on the left and right sides of the lifting plate 330, the tension force of an anode material 30 for a secondary battery may be finely adjusted by finely adjusting the height of the left and right sides of a current-carrying roll 100, thereby preventing damage to the anode material 30 for a secondary battery.

## Claims

1. A horizontal transfer-type plating apparatus for anode materials for secondary batteries, the apparatus comprising:
a chamber (10) with a plurality of current-carrying rolls (100) and equipped with a plating bath (50) containing a plating solution, wherein the plurality of current-carrying rolls (100) is rotated and driven by a driving means (200) to transport an anode material (30) for a secondary battery in a horizontal direction, and arranged up and down to adjust tension of the anode material (30);
a lifting means (300) which is configured to raise and lower the current-carrying rolls (100) while plating;
a slip ring (400) that is coupled to a connecting shaft (150) connected to an end of a drive shaft (110) for the current-carrying rolls (100) and that is configured to supply power from a rectifier to the current-carrying rolls (100); and
the connecting shaft (150) and the drive shaft (110).

2. The apparatus of claim 1, wherein the lifting means (300) comprises:
a base plate (310) fixed to an inside of the chamber (10) equipped with the plating bath (50);
a fixing bracket (315) fixed to each of left and right sides of the base plate (310);
a lifting screw (320) coupled to the left or right fixing bracket (315) so as to penetrate the fixing bracket (315) in a vertical direction, provided with a lifting gear (325) at the top thereof, fastened to a lifting plate (330) supporting the drive shaft (110) for the current-carrying rolls (100), and raising and lowering the lifting plate (330) up and down during rotation;
a lifting member (340) coupled to each of lower left and right sides of the lifting plate (330) to move up and down in conjunction with a movement of the lifting plate (330) in the vertical direction, and coupled to penetrate each end of the drive shaft (110) for the current-carrying rolls (100) to lift the current-carrying rolls (100) during a lifting motion of the lifting plate (330);
an interlocking member (350) that is coupled to the lower left side of the lifting plate (330) and is coupled to penetrate the connecting shaft (150) to interlock and move the connecting shaft (150) up and down during the lifting motion of the lifting plate (330); and
a lifting motor (360) that is fixed to each of the left and right sides of the base plate (310), is rotated when power is supplied, and has an interlocking gear (365) that engages with the lifting gear (325) of the lifting screw (320).

3. The apparatus of claim 1, wherein the lifting means (300) comprises:
a base plate (310) fixed to an inside of the chamber (10) equipped with the plating bath (50);
a fixing bracket (315) fixed to a center of the base plate (310);
a lifting screw (320) coupled to the fixing bracket (315) so as to penetrate the fixing bracket (315) in a vertical direction, provided with a lifting gear (325) at the top thereof, fastened to a lifting plate (330) supporting the drive shaft (110) for the current-carrying rolls (100), and raising and lowering the lifting plate (330) up and down during rotation;
a lifting member (340) coupled to each of lower left and right sides of the lifting plate (330) to move up and down in conjunction with a movement of the lifting plate (330) in the vertical direction, and coupled to penetrate each end of the drive shaft (110) for the current-carrying rolls (100) to lift the current-carrying rolls (100) during a lifting motion of the lifting plate (330);
an interlocking member (350) that is coupled to the lower left side of the lifting plate (330) and is coupled to penetrate the connecting shaft (150) to interlock and move the connecting shaft (150) up and down during the lifting motion of the lifting plate (330); and
a lifting motor (360) that is fixed to the base plate (310), is rotated when power is supplied, and has an interlocking gear (365) that engages with the lifting gear (325) of the lifting screw (320).

4. The apparatus of claim 1, wherein the lifting means (300) comprises:
a base plate (310) fixed to an inside of the chamber 10 equipped with the plating bath 50;
a fixing bracket (315) fixed to each of left and right sides of the base plate (310);
a lifting screw (320) coupled to the left or right fixing bracket (315) so as to penetrate the fixing bracket (315) in a vertical direction, provided with a lifting gear (325) at the top thereof, fastened to a lifting plate (330) supporting the drive shaft (110) for the current-carrying rolls (100), and raising and lowering the lifting plate (330) up and down during rotation;
a lifting member (340) coupled to each of lower left and right sides of the lifting plate (330) to move up and down in conjunction with a movement of the lifting plate (330) in the vertical direction, and coupled to penetrate each end of the drive shaft (110) for the current-carrying rolls (100) to lift the current-carrying rolls (100) during a lifting motion of the lifting plate (330);
an interlocking member (350) that is coupled to the lower left side of the lifting plate (330) and is coupled to penetrate the connecting shaft (150) to interlock and move the connecting shaft (150) up and down during the lifting motion of the lifting plate (330); and
a rotating shaft mechanism (370) disposed on each of the left and right sides of the base plate (310), connected to a handle (372) to be rotated by an operator's manual operation, and has an interlocking gear (365) that engages with the lifting gear (325) of the lifting screw (320).

5. The apparatus of any one of claims 2 to 4, wherein the lifting means (300) further comprises:
a guide means (500) for guiding the up and down lifting motion of the lifting plate (330),
wherein the guide means (500) is provided with:
a guide bracket (510) fixed to the base plate (310) and disposed on each of upper and lower sides of the lifting plate (330); and
a guide member (520) that is coupled to penetrate the lifting plate (330) and has upper and lower ends thereof supported by the guide brackets (510).

6. The apparatus of claim 2, wherein the lifting screw (320) of the lifting means (300) consists of first and second lifting screws (322, 324) arranged to be spaced apart from each other in a left-right direction to individually control left and right lifting motions of the drive shaft (110) for the current-carrying rolls (100), and
the lifting motor (360) of the lifting means (300) consists of first and second lifting motors (362, 364) each having an interlocking gear (365) that is engaged with the lifting gear (325) of each of the first and second lifting screws (322, 324).

7. The apparatus of any ones of claims 1 to 6, wherein the driving means (200) comprises:
a driving gear (210) coupled to the drive shaft (110) for the current-carrying rolls (100); and
a rotary motor (220) fixed to a base plate (310) provided in the chamber (10) equipped with the plating bath (50), having a rotary gear (225) engaged with the driving gear (210), and rotated when external power is supplied to rotate the drive shaft (110) by means of the driving gear (210), wherein the base plate (310) is fixed to an inside of the chamber (10) equipped with the plating bath (50).

8. A horizontal transfer-type plating method for anode materials for secondary batteries, the method comprising:
a preparatory step (S1) of arranging a plurality of current-carrying rolls (100) up and down at positions close to entrance and exit sides of a plating bath (50) containing a plating solution;
a transfer step (S2) of transferring an anode material (30) for a secondary battery into the plating bath (50) in a horizontal movement manner through the current-carrying rolls (100) arranged up and down and to which power of a rectifier is applied; and
a tension adjustment step (S3) in which tension of the anode material (30) for a secondary battery is adjusted by raising and lowering the current-carrying rolls (100) using a lifting means (300) while plating the anode material (30) for a secondary battery through the transfer step (S2).

9. The method of claim 8, wherein in the tension adjustment step (S3), a height of left and right edge portions of each of the current-carrying rolls (100) is individually adjusted as the left and right edge portions of the each of the current-carrying rolls (100), which are in contact with the anode material (30) for a secondary battery, are individually raised and lowered using the lifting means (300).

10. The method of claim 8, wherein in the tension adjustment step (S3), the tension of the anode material (30) for a secondary battery is adjusted by lifting the current-carrying rolls (100) up and down using the lifting means (300) consisting of: a fixing bracket (315) fixed to a side of a base plate (310) provided inside a chamber (10); a lifting screw (320) coupled to the fixing bracket (315) so as to penetrate the fixing bracket (315) in a vertical direction, provided with a lifting gear (325) at the top thereof, fastened to a lifting plate (330) supporting a drive shaft (110) for the current-carrying rolls (100), and raising and lowering the lifting plate (330) up and down during rotation; a lifting member (340) coupled to a lower side of the lifting plate (330), moving up and down in conjunction with a movement of the lifting plate (330) in the vertical direction, and coupled to penetrate each end of the drive shaft (110) for the current-carrying rolls (100) to lift the current-carrying rolls (100) during a lifting motion of the lifting plate (330); an interlocking member (350) that is coupled to a lower left side of the lifting plate (330) and is coupled to penetrate a connecting shaft (150) to interlock and move the connecting shaft (150) up and down during the lifting motion of the lifting plate (330); and a lifting motor (360) that is fixed to the base plate (310), is rotated when power is supplied, and has an interlocking gear (365) that engages with the lifting gear (325) of the lifting screw (320).

## Patentansprüche

1. Beschichtungsvorrichtung vom Horizontaltransfertyp für Anodenmaterialien für Sekundärbatterien, wobei die Vorrichtung Folgendes umfasst:
eine Kammer (10) mit einer Vielzahl an stromführenden Walzen (100) und ausgestattet mit einem Beschichtungsbad (50), das eine Beschichtungslösung enthält, wobei die mehreren stromführenden Walzen (100) durch ein Antriebsmittel (200) gedreht und angetrieben werden, um ein Anodenmaterial (30) für eine Sekundärbatterie in einer horizontalen Richtung zu transportieren, und oben und unten angeordnet sind, um die Spannung des Anodenmaterials (30) einzustellen;
ein Hebemittel (300), das konfiguriert ist, die stromführenden Walzen (100) während des Beschichtens anzuheben und abzusenken;
einen Schleifring (400), der mit einer Verbindungswelle (150) gekoppelt ist, die mit einem Ende einer Antriebswelle (110) für die stromführenden Walzen (100) verbunden ist, und der konfiguriert ist, den stromführenden Walzen (100) Strom von einem Gleichrichter zuzuführen; und
die Verbindungswelle (150) und die Antriebswelle (110).

2. Vorrichtung nach Anspruch 1, wobei das Hebemittel (300) Folgendes umfasst:
eine Tragplatte (310), die an einer Innenseite der Kammer (10) befestigt ist, die mit dem Beschichtungsbad (50) ausgestattet ist;
eine Befestigungshalterung (315), die an jeder der linken und rechten Seiten der Tragplatte (310) befestigt ist;
eine Hebeschraube (320), die mit der linken oder rechten Befestigungshalterung (315) gekoppelt ist, um die Befestigungshalterung (315) in einer vertikalen Richtung zu durchdringen, die an ihrer Oberseite mit einem Hebegetriebe (325) versehen ist, das an einer Hebeplatte (330) befestigt ist, die die Antriebswelle (110) für die stromführenden Walzen (100) trägt, und die Hebeplatte (330) während der Drehung anhebt und absenkt;
ein Hebeelement (340), das mit jeder der unteren linken und rechten Seiten der Hebeplatte (330) gekoppelt ist, um sich in Verbindung mit einer Bewegung der Hebeplatte (330) in der vertikalen Richtung auf und ab zu bewegen, und gekoppelt ist, um jedes Ende der Antriebswelle (110) für die stromführenden Walzen (100) zu durchdringen, um die stromführenden Walzen (100) während einer Hebebewegung der Hebeplatte (330) anzuheben;
ein Verbindungselement (350), das mit der unteren linken Seite der Hebeplatte (330) gekoppelt ist und gekoppelt ist, um die Verbindungswelle (150) zu durchdringen, um die Verbindungswelle (150) anzubinden und während der Hebebewegung der Hebeplatte (330) auf und ab zu bewegen; und
einen Hebemotor (360), der an jeder der linken und rechten Seiten der Tragplatte (310) befestigt ist, und gedreht wird, wenn Strom zugeführt wird, sowie ein Verbindungsgetriebe (365) aufweist, das mit dem Hebegetriebe (325) der Hebeschraube (320) in Eingriff steht.

3. Vorrichtung nach Anspruch 1, wobei das Hebemittel (300) Folgendes umfasst:
eine Tragplatte (310), die an einer Innenseite der Kammer (10) befestigt ist, die mit dem Beschichtungsbad (50) ausgestattet ist;
eine Befestigungshalterung (315), die an einer Mitte der Tragplatte (310) befestigt ist;
eine Hebeschraube (320), die mit der Befestigungshalterung (315) gekoppelt ist, um die Befestigungshalterung (315) in einer vertikalen Richtung zu durchdringen, die an ihrer Oberseite mit einem Hebegetriebe (325) versehen ist, das an einer Hebeplatte (330) befestigt ist, die die Antriebswelle (110) für die stromführenden Walzen (100) trägt, und die Hebeplatte (330) während der Drehung anhebt und absenkt;
ein Hebeelement (340), das mit jeder der unteren linken und rechten Seiten der Hebeplatte (330) gekoppelt ist, um sich in Verbindung mit einer Bewegung der Hebeplatte (330) in der vertikalen Richtung auf und ab zu bewegen, und gekoppelt ist, um jedes Ende der Antriebswelle (110) für die stromführenden Walzen (100) zu durchdringen, um die stromführenden Walzen (100) während einer Hebebewegung der Hebeplatte (330) anzuheben;
ein Verbindungselement (350), das mit der unteren linken Seite der Hebeplatte (330) gekoppelt ist und gekoppelt ist, um die Verbindungswelle (150) zu durchdringen, um die Verbindungswelle (150) anzubinden und während der Hebebewegung der Hebeplatte (330) auf und ab zu bewegen; und
einen Hebemotor (360), der an jeder der linken und rechten Seiten der Tragplatte (310) befestigt ist, und gedreht wird, wenn Strom zugeführt wird, sowie ein Verbindungsgetriebe (365) aufweist, das mit dem Hebegetriebe (325) der Hebeschraube (320) in Eingriff steht.

4. Vorrichtung nach Anspruch 1, wobei das Hebemittel (300) Folgendes umfasst:
eine Tragplatte (310), die an einer Innenseite der Kammer (10) befestigt ist, die mit dem Beschichtungsbad (50) ausgestattet ist;
eine Befestigungshalterung (315), die an einer Mitte der Tragplatte (310) befestigt ist;
eine Hebeschraube (320), die mit der Befestigungshalterung (315) gekoppelt ist, um die Befestigungshalterung (315) in einer vertikalen Richtung zu durchdringen, die an ihrer Oberseite mit einem Hebegetriebe (325) versehen ist, das an einer Hebeplatte (330) befestigt ist, die die Antriebswelle (110) für die stromführenden Walzen (100) trägt, und die Hebeplatte (330) während der Drehung anhebt und absenkt;
ein Hebeelement (340), das mit jeder der unteren linken und rechten Seiten der Hebeplatte (330) gekoppelt ist, um sich in Verbindung mit einer Bewegung der Hebeplatte (330) in der vertikalen Richtung auf und ab zu bewegen, und gekoppelt ist, um jedes Ende der Antriebswelle (110) für die stromführenden Walzen (100) zu durchdringen, um die stromführenden Walzen (100) während einer Hebebewegung der Hebeplatte (330) anzuheben;
ein Verbindungselement (350), das mit der unteren linken Seite der Hebeplatte (330) gekoppelt ist und gekoppelt ist, um die Verbindungswelle (150) zu durchdringen, um die Verbindungswelle (150) anzubinden und während der Hebebewegung der Hebeplatte (330) auf und ab zu bewegen; und
einen Drehwellenmechanismus (370), der an jeder der linken und rechten Seiten der Tragplatte (310) angeordnet ist, mit einem Griff (372) verbunden ist, um durch eine manuelle Betätigung eines Bedieners gedreht zu werden, und ein Verbindungsgetriebe (365) aufweist, das mit dem Hebegetriebe (325) der Hebeschraube (320) in Eingriff steht.

5. Vorrichtung nach einem der Ansprüche 2 bis 4, wobei das Hebemittel (300) ferner Folgendes umfasst:
ein Führungsmittel (500) zum Führen der Auf- und Abhebebewegung der Hebeplatte (330),
wobei das Führungsmittel (500) versehen ist mit:
einer Führungshalterung (510), die an der Tragplatte (310) befestigt ist und an jeder der oberen und unteren Seiten der Hebeplatte (330) angeordnet ist; und
einem Führungselement (520), das gekoppelt ist, um die Hebeplatte (330) zu durchdringen, und dessen obere und untere Enden von den Führungshalterungen (510) getragen werden.

6. Vorrichtung nach Anspruch 2, wobei die Hebeschraube (320) des Hebemittels (300) aus einer ersten und zweiten Hebeschraube (322, 324) besteht, die so angeordnet sind, dass sie in einer Links-Rechts-Richtung voneinander beabstandet sind, um die linke und rechte Hebebewegung der Antriebswelle (110) für die stromführenden Walzen (100) individuell zu steuern, und
der Hebemotor (360) des Hebemittels (300) aus einem ersten und zweiten Hebemotor (362, 364) besteht, die jeweils ein Verbindungsgetriebe (365) aufweisen, das mit dem Hebegetriebe (325) jeder der ersten und zweiten Hebeschraube (322, 324) in Eingriff steht.

7. Vorrichtung nach einem der Ansprüche 1 bis 6, wobei das Antriebsmittel (200) Folgendes umfasst:
ein Antriebsgetriebe (210), das mit der Antriebswelle (110) für die stromführenden Walzen (100) gekoppelt ist; und
einen Drehmotor (220), der an einer Tragplatte (310) befestigt ist, die in der Kammer (10) vorgesehen ist, die mit dem Beschichtungsbad (50) ausgestattet ist, und ein Drehgetriebe (225) aufweist, das mit dem Antriebsgetriebe (210) in Eingriff steht, sowie gedreht wird, wenn externer Strom zugeführt wird, um die Antriebswelle (110) mittels des Antriebsgetriebes (210) zu drehen, wobei die Tragplatte (310) an einer Innenseite der Kammer (10) befestigt ist, die mit dem Beschichtungsbad (50) ausgestattet ist.

8. Beschichtungsverfahren vom Horizontaltransfertyp für Anodenmaterialien für Sekundärbatterien, wobei das Verfahren Folgendes umfasst:
einen Vorbereitungsschritt (S1) des Anordnens einer Vielzahl an stromführenden Walzen (100) oben und unten an Positionen nahe der Eingangs- und Ausgangsseite eines Beschichtungsbads (50), das eine Beschichtungslösung enthält;
einen Transferschritt (S2) des Transferierens eines Anodenmaterials (30) für eine Sekundärbatterie in das Beschichtungsbad (50) in einer Horizontalbewegungsweise durch die stromführenden Walzen (100), die oben und unten angeordnet sind und an die Strom eines Gleichrichters angeschlossen wird; und
einen Spannungseinstellschritt (S3), in dem die Spannung des Anodenmaterials (30) für eine Sekundärbatterie durch Anheben und Absenken der stromführenden Walzen (100) unter Verwendung eines Hebemittels (300) eingestellt wird, während das Anodenmaterial (30) für eine Sekundärbatterie durch den Transferschritt (S2) beschichtet wird.

9. Verfahren nach Anspruch 8, wobei in dem Spannungseinstellschritt (S3) eine Höhe der linken und rechten Kantenabschnitte jeder der stromführenden Walzen (100) individuell eingestellt wird, während die linken und rechten Kantenabschnitte jeder der stromführenden Walzen (100), die mit dem Anodenmaterial (30) für eine Sekundärbatterie in Kontakt stehen, individuell unter Verwendung des Hebemittels (300) angehoben und abgesenkt werden.

10. Verfahren nach Anspruch 8, wobei in dem Spannungseinstellschritt (S3) die Spannung des Anodenmaterials (30) für eine Sekundärbatterie durch Anheben der stromführenden Walzen (100) nach oben und unten unter Verwendung des Hebemittels (300) eingestellt wird, das aus Folgendem besteht: einer Befestigungshalterung (315), die an einer Seite einer Tragplatte (310) befestigt ist, die in einer Kammer (10) vorgesehen ist; einer Hebeschraube (320), die mit der Befestigungshalterung (315) gekoppelt ist, um die Befestigungshalterung (315) in einer vertikalen Richtung zu durchdringen, die an ihrer Oberseite mit einem Hebegetriebe (325) versehen ist, das an einer Hebeplatte (330) befestigt ist, die eine Antriebswelle (110) für die stromführenden Walzen (100) trägt, und die Hebeplatte (330) während der Drehung anhebt und absenkt; einem Hebeelement (340), das mit einer unteren Seite der Hebeplatte (330) gekoppelt ist, und sich in Verbindung mit einer Bewegung der Hebeplatte (330) in der vertikalen Richtung auf und ab bewegt, und gekoppelt ist, um jedes Ende der Antriebswelle (110) für die stromführenden Walzen (100) zu durchdringen, um die stromführenden Walzen (100) während einer Hebebewegung der Hebeplatte (330) anzuheben; einem Verbindungselement (350), das mit einer unteren linken Seite der Hebeplatte (330) gekoppelt ist, und gekoppelt ist, um eine Verbindungswelle (150) zu durchdringen, um die Verbindungswelle (150) anzubinden und während der Hebebewegung der Hebeplatte (330) nach oben und unten zu bewegen; und einem Hebemotor (360), der an der Tragplatte (310) befestigt ist, und gedreht wird, wenn Strom zugeführt wird, sowie ein Verbindungsgetriebe (365) aufweist, das mit dem Hebegetriebe (325) der Hebeschraube (320) in Eingriff steht.

## Revendications

1. Appareil de placage de type à transfert horizontal pour des matières d'anode pour des batteries secondaires, l'appareil comportant :
une chambre (10) ayant une pluralité de rouleaux parcourus par un courant (100) et équipée d'un bain de placage (50) contenant une solution de placage, dans lequel la pluralité de rouleaux parcourus par un courant (100) est mise en rotation et entraînée par des moyens d'entraînement (200) pour transporter une matière d'anode (30) pour une batterie secondaire dans une direction horizontale, et agencée vers le haut et vers le bas pour régler une tension de la matière d'anode (30) ;
des moyens de levage (300) qui sont configurés pour faire monter et descendre les rouleaux parcourus par un courant (100) pendant un placage ;
une bague collectrice (400) qui est couplée à un arbre de liaison (150) relié à une extrémité d'un arbre d'entraînement (110) pour les rouleaux parcourus par un courant (100) et qui est configurée pour fournir de l'énergie provenant d'un redresseur aux rouleaux parcourus par un courant (100) ; et
l'arbre de liaison (150) et l'arbre d'entraînement (110).

2. Appareil selon la revendication 1, dans lequel les moyens de levage (300) comportent :
une plaque de base (310) fixée à un intérieur de la chambre (10) équipée du bain de placage (50) ;
un support de fixation (315) fixé à chacun des côtés gauche et droit de la plaque de base (310) ;
une vis de levage (320) couplée au support de fixation gauche ou droit (315) de manière à pénétrer dans le support de fixation (315) dans une direction verticale, munie d'un engrenage de levage (325) sur le dessus de celle-ci, fixée à une plaque de levage (330) supportant l'arbre d'entraînement (110) pour les rouleaux parcourus par un courant (100), et faisant monter et descendre la plaque de levage (330) vers le haut et vers le bas pendant une rotation ;
un élément de levage (340) couplé à chacun des côtés gauche et droit inférieurs de la plaque de levage (330) pour se déplacer vers le haut et vers le bas conjointement avec un mouvement de la plaque de levage (330) dans la direction verticale, et couplé de manière à pénétrer dans chaque extrémité de l'arbre d'entraînement (110) pour les rouleaux parcourus par un courant (100) afin de lever les rouleaux parcourus par un courant (100) pendant un mouvement de levage de la plaque de levage (330) ;
un élément d'interverrouillage (350) qui est couplé au côté gauche inférieur de la plaque de levage (330) et est couplé de manière à pénétrer dans l'arbre de liaison (150) pour interverrouiller et déplacer l'arbre de liaison (150) vers le haut et vers le bas pendant le mouvement de levage de la plaque de levage (330) ; et
un moteur de levage (360) qui est fixé à chacun des côtés gauche et droit de la plaque de base (310), est en rotation lorsque de l'énergie est fournie, et a un engrenage d'interverrouillage (365) qui s'engrène avec l'engrenage de levage (325) de la vis de levage (320).

3. Appareil selon la revendication 1, dans lequel les moyens de levage (300) comportent :
une plaque de base (310) fixée à un intérieur de la chambre (10) équipée du bain de placage (50) ;
un support de fixation (315) fixé à un centre de la plaque de base (310) ;
une vis de levage (320) couplée au support de fixation (315) de manière à pénétrer dans le support de fixation (315) dans une direction verticale, munie d'un engrenage de levage (325) sur le dessus de celle-ci, fixée à une plaque de levage (330) supportant l'arbre d'entraînement (110) pour les rouleaux parcourus par un courant (100), et faisant monter et descendre la plaque de levage (330) vers le haut et vers le bas pendant une rotation ;
un élément de levage (340) couplé à chacun des côtés gauche et droit inférieurs de la plaque de levage (330) pour se déplacer vers le haut et vers le bas conjointement avec un mouvement de la plaque de levage (330) dans la direction verticale, et couplé de manière à pénétrer dans chaque extrémité de l'arbre d'entraînement (110) pour les rouleaux parcourus par un courant (100) afin de lever les rouleaux parcourus par un courant (100) pendant un mouvement de levage de la plaque de levage (330) ;
un élément d'interverrouillage (350) qui est couplé au côté gauche inférieur de la plaque de levage (330) et est couplé de manière à pénétrer dans l'arbre de liaison (150) pour interverrouiller et déplacer l'arbre de liaison (150) vers le haut et vers le bas pendant le mouvement de levage de la plaque de levage (330) ; et
un moteur de levage (360) qui est fixé à la plaque de base (310), est en rotation lorsque de l'énergie est fournie, et a un engrenage d'interverrouillage (365) qui s'engrène avec l'engrenage de levage (325) de la vis de levage (320).

4. Appareil selon la revendication 1, dans lequel les moyens de levage (300) comportent :
une plaque de base (310) fixée à un intérieur de la chambre (10) équipée du bain de placage (50) ;
un support de fixation (315) fixé à chacun des côtés gauche et droit de la plaque de base (310) ;
une vis de levage (320) couplée au support de fixation gauche ou droit (315) de manière à pénétrer dans le support de fixation (315) dans une direction verticale, munie d'un engrenage de levage (325) sur le dessus de celle-ci, fixée à une plaque de levage (330) supportant l'arbre d'entraînement (110) pour les rouleaux parcourus par un courant (100), et faisant monter et descendre la plaque de levage (330) vers le haut et vers le bas pendant une rotation ;
un élément de levage (340) couplé à chacun des côtés gauche et droit inférieurs de la plaque de levage (330) pour se déplacer vers le haut et vers le bas conjointement avec un mouvement de la plaque de levage (330) dans la direction verticale, et couplé de manière à pénétrer dans chaque extrémité de l'arbre d'entraînement (110) pour les rouleaux parcourus par un courant (100) afin de lever les rouleaux parcourus par un courant (100) pendant un mouvement de levage de la plaque de levage (330) ;
un élément d'interverrouillage (350) qui est couplé au côté gauche inférieur de la plaque de levage (330) et est couplé de manière à pénétrer dans l'arbre de liaison (150) pour interverrouiller et déplacer l'arbre de liaison (150) vers le haut et vers le bas pendant le mouvement de levage de la plaque de levage (330) ; et
un mécanisme d'arbre rotatif (370) disposé sur chacun des côtés gauche et droit de la plaque de base (310), relié à une poignée (372) pour être mis en rotation par une opération manuelle de l'opérateur, et a un engrenage d'interverrouillage (365) qui s'engrène avec l'engrenage de levage (325) de la vis de levage (320).

5. Appareil selon l'une quelconque des revendications 2 à 4, dans lequel les moyens de levage (300) comportent en outre :
des moyens de guidage (500) pour guider le mouvement de levage vers le haut et vers le bas de la plaque de levage (330),
dans lequel les moyens de guidage (500) sont munis :
d'un support de guidage (510) fixé à la plaque de base (310) et disposé sur chacun des côtés supérieur et inférieur de la plaque de levage (330) ; et
d'un élément de guidage (520) qui est couplé de manière à pénétrer dans la plaque de levage (330) et a des extrémités supérieure et inférieure de celui-ci supportées par les supports de guidage (510).

6. Appareil selon la revendication 2, dans lequel la vis de levage (320) des moyens de levage (300) est constituée de première et seconde vis de levage (322, 324) agencées de manière à être espacées l'une de l'autre dans une direction gauche-droite pour commander individuellement des mouvements de levage gauche et droit de l'arbre d'entraînement (110) pour les rouleaux parcourus par un courant (100), et
le moteur de levage (360) des moyens de levage (300) est constitué de premier et second moteurs de levage (362, 364) ayant chacun un engrenage d'interverrouillage (365) qui s'engrène avec l'engrenage de levage (325) de chacune des première et seconde vis de levage (322, 324).

7. Appareil selon l'une quelconque des revendications 1 à 6, dans lequel les moyens d'entraînement (200) comportent :
un engrenage d'entraînement (210) couplé à l'arbre d'entraînement (110) pour les rouleaux parcourus par un courant (100) ; et
un moteur rotatif (220) fixé à une plaque de base (310) prévue dans la chambre (10) équipée du bain de placage (50), ayant un engrenage rotatif (225) en engrènement avec l'engrenage d'entraînement (210), et mis en rotation lorsque de l'énergie externe est fournie pour faire tourner l'arbre d'entraînement (110) au moyen de l'engrenage d'entraînement (210), dans lequel la plaque de base (310) est fixée à un intérieur de la chambre (10) équipée du bain de placage (50).

8. Procédé de placage de type à transfert horizontal pour des matières d'anode destinées à des batteries secondaires, le procédé comportant :
une étape préparatoire (S1) consistant à agencer une pluralité de rouleaux parcourus par un courant (100) vers le haut et vers le bas à des positions proches de côtés d'entrée et de sortie d'un bain de placage (50) contenant une solution de placage ;
une étape de transfert (S2) consistant à transférer une matière d'anode (30) pour une batterie secondaire dans le bain de placage (50) de manière à générer un mouvement horizontal à travers les rouleaux parcourus par un courant (100) agencés vers le haut et vers le bas et auxquels l'énergie d'un redresseur est appliquée ; et
une étape de réglage de tension (S3) dans laquelle une tension de la matière d'anode (30) pour une batterie secondaire est réglée en faisant monter et descendre les rouleaux parcourus par un courant (100) en utilisant des moyens de levage (300) tout en plaquant la matière d'anode (30) pour une batterie secondaire via l'étape de transfert (S2).

9. Procédé selon la revendication 8, dans lequel, à l'étape de réglage de tension (S3), une hauteur de parties de bord gauche et droite de chacun des rouleaux parcourus par un courant (100) est réglée individuellement lorsque les parties de bord gauche et droite de chacun des rouleaux parcourus par un courant (100), qui sont en contact avec la matière d'anode (30) pour une batterie secondaire, sont individuellement montées et descendues en utilisant les moyens de levage (300).

10. Procédé selon la revendication 8, dans lequel, à l'étape de réglage de tension (S3), la tension de la matière d'anode (30) pour une batterie secondaire est réglée en levant les rouleaux porteurs de courant (100) vers le haut et vers le bas en utilisant les moyens de levage (300) constitués de : un support de fixation (315) fixé à un côté d'une plaque de base (310) prévue à l'intérieur d'une chambre (10) ; une vis de levage (320) couplée au support de fixation (315) de manière à pénétrer dans le support de fixation (315) dans une direction verticale, munie d'un engrenage de levage (325) sur le dessus de celle-ci, fixée à une plaque de levage (330) supportant un arbre d'entraînement (110) pour les rouleaux porteurs de courant (100), et faisant monter et descendre la plaque de levage (330) vers le haut et vers le bas pendant une rotation ; un élément de levage (340) couplé à un côté inférieur de la plaque de levage (330), se déplaçant vers le haut et vers le bas conjointement avec un mouvement de la plaque de levage (330) dans la direction verticale, et couplé de manière à pénétrer dans chaque extrémité de l'arbre d'entraînement (110) pour les rouleaux porteurs de courant (100) afin de lever les rouleaux porteurs de courant (100) pendant un mouvement de levage de la plaque de levage (330) ; un élément d'interverrouillage (350) qui est couplé à un côté gauche inférieur de la plaque de levage (330) et est couplé de manière à pénétrer dans un arbre de liaison (150) pour interverrouiller et déplacer l'arbre de liaison (150) vers le haut et vers le bas pendant le mouvement de levage de la plaque de levage (330) ; et un moteur de levage (360) fixé à la plaque de base (310), est en rotation lorsque de l'énergie est fournie, et a un engrenage d'interverrouillage (365) qui s'engrène avec l'engrenage de levage (325) de la vis de levage (320).
